# FASCICULE DE BREVET EUROPEEN

(11) **EP 2 334 465 B1**
(45) Date de publication et mention de la délivrance du brevet: **18.03.2015**
(21) Numéro de dépôt: 09740493.3
(22) Date de dépôt: 26.08.2009
(51) Int. Cl.: B23K 26/06, B23K 26/38

(54) **PROCEDE ET INSTALLATION DE COUPAGE LASER AVEC MODIFICATION DU FACTEUR DE QUALITE DU FAISCEAU LASER PAR UN COMPOSANT OPTIQUE DIFFRACTANT**
LASERSCHNEIDVERFAHREN UND EINRICHTUNG MIT MITTELN ZUM MODIFIZIEREN DES LASERSTRAHLQUALITÄTSFAKTORS DURCH EINE DIFFRAKTIVE OPTISCHE KOMPONENTE
LASER CUTTING METHOD AND EQUIPMENT, WITH MEANS FOR MODIFYING THE LASER BEAM QUALITY FACTOR BY A DIFFRACTIVE OPTICAL COMPONENT

(30) Priorité: 12.09.2008 FR 0856140
(43) Date de publication de la demande: 22.06.2011
(73) Titulaire: L'Air Liquide Société Anonyme pour l'Etude et l'Exploitation des Procédés Georges Claude, 75007 Paris (FR)
(72) Inventeur: BRIAND, Francis, F-75009 Paris (FR); BALLERINI, Gaia, F-75010 Paris (FR); DEBECKER, Isabelle, F-75017 Paris (FR); MAAZAOUI, Hakim, F-95480 Pierrelaye (FR); VERNA, Eric, F-95650 Boissy l'Aillerie (FR)
(74) Mandataire: Pittis, Olivier
(86) Numéro de dépôt international: PCT/FR2009/051629
(87) Numéro de publication internationale: WO 2010/029243

(56) Documents cités:
- EP-A- 1 623 788
- EP-A- 1 927 425
- FR-A- 2 897 007
- US-A1- 2005 121 427

## Description

L'invention a trait à un procédé de découpe laser et une installation de coupage laser, conformément au préambule des revendications 1 et 12, (voir par exemple FR-A-2897007) dont l'efficacité a été améliorée grâce à l'utilisation d'un dispositif optique permettant de modifier le facteur de qualité du faisceau laser, en particulier d'un faisceau laser émanant d'un dispositif laser à fibres contenant de l'ytterbium.

Les lasers de type CO₂ sont largement employés dans l'industrie pour découper les matériaux métalliques et non-métalliques.

Les lasers à solide, tels que les lasers à fibres dopées ytterbium ou à disque, ont également bénéficié d'importantes avancées ces dernières années et combinent des puissances de plusieurs kW avec d'excellents facteurs de qualité, contrairement aux lasers à milieu solide massif, i.e. les lasers Nd:YAG.

Au-delà des caractéristiques qui font des lasers à fibres des sources laser bien adaptées à la découpe industrielle de matériaux métalliques, en l'occurrence une longueur d'onde plus courte que celle des lasers CO₂ mieux absorbée par le métal et transportable par fibre optique, un encombrement réduit et une plus grande fiabilité, on s'attend à ce que leur grande brillance améliore significativement les performances de découpe.

Il est généralement admis que focaliser un faisceau laser de forte puissance sur la pièce à découper avec un diamètre de faisceau réduit et un faible angle de divergence peut conduire à un gain en vitesse et en qualité de découpe, à savoir des faces de coupe droites et sans bavures.

De plus, la maximisation de la longueur de Rayleigh du faisceau rend le procédé plus tolérant en termes de positionnement du point focal dans l'épaisseur du matériau.

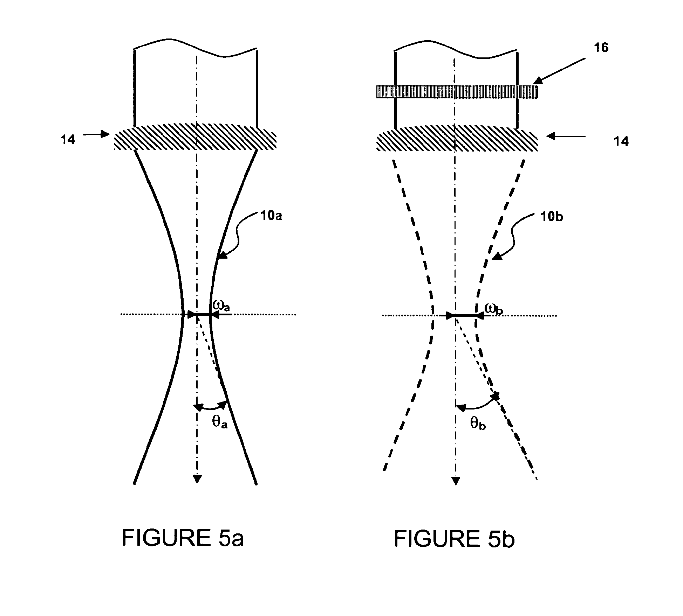

Ces conditions sont satisfaites lorsque le procédé de découpe met en oeuvre des sources laser présentant un bon facteur de qualité ou BPP (pour *Beam Parameter Product).* Le degré de qualité d'un faisceau laser se mesure par son BPP, qui est exprimé comme étant égal au produit du rayon ω au col du faisceau laser par son demi-angle de divergence θ, comme illustré sur les Figures 5a et 5b.

On comprend dès lors pourquoi le choix d'un faisceau laser de faible BPP est souvent privilégié pour garantir de bonnes performances de découpe. Ceci se vérifie en particulier sur la découpe de matériaux métalliques de faibles épaisseurs, c'est-à-dire moins de 4 mm, où un BPP plus faible permet généralement de gagner en vitesse de découpe, grâce à une meilleure efficacité du procédé.

Cependant, on s'attend aussi à ce qu'un BPP plus grand favorise l'élimination des bavures restant attachées au bas des faces de coupe, après le passage du faisceau, particulière-ment dans le cas des plus fortes épaisseurs, typiquement de 4 mm et plus. En effet, au cours d'essais de découpe sur acier doux et sur acier inoxydable, une meilleure élimination des bavures a été obtenue en utilisant un faisceau laser de plus grand BPP pour des tôles de 8 à 10 mm en acier doux et de 4 mm en acier inoxydable. Il s'avère que l'impact d'un faisceau laser de plus grand diamètre sur la pièce à découper permet d'ouvrir une saignée de découpe plus large, ce qui favorise la pénétration et l'efficacité du gaz de découpe.

Au-delà de ce phénomène, le fait de changer le BPP du faisceau focalisé permet de modifier la distribution spatiale de l'énergie du faisceau sur toute la profondeur de découpe. Ainsi, lorsqu'un faisceau laser est utilisé pour des applications de découpe, la possibilité de changer son BPP en fonction de la gamme d'épaisseurs à découper présente un grand intérêt, particulièrement pour les applications exigeantes telles que la découpe de petits contours, où l'élimination des bavures résiduelles est un problème critique.

Cependant, le BPP est un paramètre imposé par les caractéristiques de la fibre optique émettant le faisceau laser et par les caractéristiques de la source laser. Or, ce paramètre influe sur les performances, notamment vitesse et qualité de découpe, d'un procédé de découpe par laser à fibres.

Une solution pour optimiser les performances du procédé serait de travailler avec un lot de fibres optiques de différents diamètres pour disposer de plusieurs valeurs de BPP. Cette solution n'est toutefois pas envisageable en milieu industriel où la manipulation intensive des fibres n'est pas recommandée. Elle impose également l'utilisation d'un coupleur de fibres qui est un élément coûteux et dont les performances se dégradent dans le temps.

On connait par ailleurs de EP-A-1623788 une solution pour modifier le facteur de qualité d'un faisceau laser CO₂ consistant à introduire sur le trajet du faisceau une optique asphérique ou plusieurs lentilles sphériques de courtes focales. Toutefois, il s'avère que cette solution utilise des dispositifs optiques traditionnels qui ne permettent pas de modifier efficacement le BPP d'un faisceau laser à fibres.

Dans ce contexte, on souhaite pouvoir améliorer, de manière simple, l'efficacité d'un procédé de découpe par laser à fibres, notamment vitesse et/ou qualité de coupe, sans avoir à recourir à plusieurs fibres conduisant à des BPP différents, ainsi que dimensionner le BPP du faisceau laser, notamment en fonction de l'épaisseur du matériau à découper et/ou de la composition dudit matériau à découper, afin d'optimiser les performances en vitesse et qualité du procédé de découpe.

Une solution à ce problème est alors un procédé de découpe par faisceau laser d'une pièce à découper conformément à la revendication 1.

Selon le cas, le procédé de l'invention peut comprendre l'une ou plusieurs des caractéristiques suivantes:
- on agence le dispositif optique apte à et conçu pour modifier le BPP du faisceau laser, sur le trajet du faisceau laser, de préférence entre la fibre de convoyage et l'optique de focalisation.
- le BPP du faisceau incident avant son passage dans le dispositif optique de modification de BPP, est compris entre 0.33 et 25 mm.mrad, de préférence inférieur ou égal à 10 mm.mrad, en particulier dans le cas d'une fibre optique de convoyage de diamètre inférieur ou égal à 200 µm.
- le dispositif optique de modification de BPP est apte à multiplier le BPP du faisceau laser par un facteur multiplicateur supérieur ou égal à 1,5 et/ou inférieur ou égal à 3.
- le dispositif optique de modification de BPP est au moins un élément optique diffractant transmissif ou réflectif.
- la tête de focalisation comprend au moins une optique de focalisation et le dispositif optique apte à et conçu pour modifier le BPP du faisceau laser incident, de préférence la tête de focalisation comprend en outre au moins une optique de collimation de faisceau.
- le dispositif optique transmissif est réalisé en silice fondue, en quartz, en verre spécial, en sulfure de zinc (ZnS) ou en séléniure de zinc (ZnSe), de préférence il comprend un traitement antireflet.
- le dispositif optique a une épaisseur comprise entre 0.5 et 10 mm, préférablement entre 3 et 7 mm, et est avantageusement de forme circulaire avec un diamètre compris de préférence entre 25 et 75 mm.
- le dispositif optique est de type réflectif fonctionnant avec un angle d'incidence (α) compris entre 5 et 50°, et est réalisé en silice fondue, en quartz, en verre spécial, en sulfure de zinc (ZnS), en séléniure de zinc (ZnSe) ou en matériau métallique, et comprend de préférence un traitement réfléchissant.
- le dispositif optique est conçu pour modifier le BPP et la distribution d'intensité du faisceau initial, préférablement du type gaussien ou pseudo-gaussien, en une distribution d'intensité autre, par exemple du type anneau, i.e. « *hollow-ring* » ou « *doughnut ».*
- le dispositif optique combine une fonction diffractive et une fonction autre, en particulier une fonction de focalisation du faisceau laser.
- la longueur d'onde du faisceau laser est comprise entre 1.06 et 1.10 µm.
- la puissance du faisceau laser est comprise entre 0.1 et 25 kW.
- on génère un faisceau laser au moyen d'une source laser à fibres contenant de l'ytterbium ou de l'erbium, de préférence des fibres contenant de l'ytterbium.

L'invention concerne aussi une installation de coupage laser comprenant une source laser conformément à la revendication 12.

L'invention va maintenant être mieux comprise grâce à la description suivante, faite en références aux figures annexées parmi lesquelles:
- la Figure 1 présente un exemple d'installation de coupage laser sans mise en oeuvre de l'invention ;
- les Figures 2 à 4 présentent des exemples de mise en oeuvre de l'invention ;
- les Figures 5a et 5b illustrent le faisceau laser focalisé avec ses principaux paramètres, rayon au col et divergence du faisceau laser, en l'absence ou en présence d'un élément optique diffractant selon l'invention sur le trajet du faisceau laser, et schématisent un exemple d'effet que peut avoir un tel élément sur les paramètres du faisceau laser focalisé ;
- la Figure 6 représente une mesure expérimentale de l'évolution du rayon du faisceau laser focalisé le long de l'axe de propagation, avant et après insertion d'un élément optique diffractant selon l'invention ;
- les Figures 7 et 8 présentent des résultats d'essais de découpe menés sur acier doux et sur acier inoxydable permettant de comparer les performances obtenues avec des faisceaux laser focalisés présentant deux valeurs de BPP distinctes, et
- la Figure 9 est un schéma de principe d'un mode de réalisation d'une installation selon l'invention.

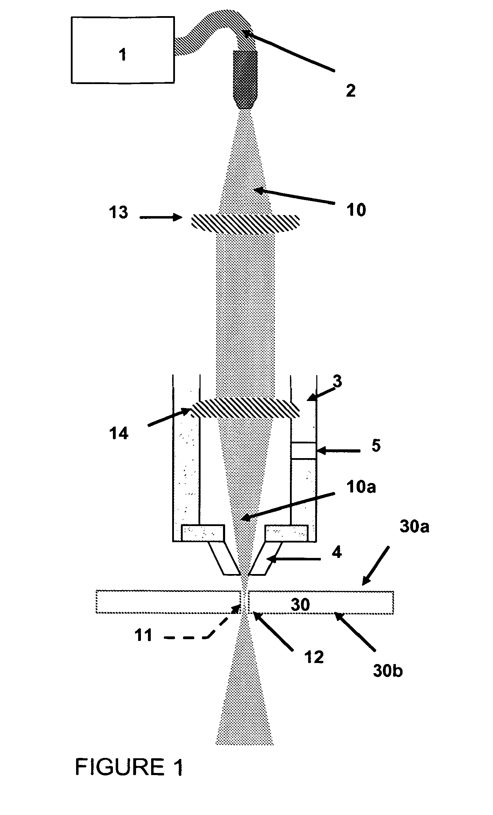

Comme illustré sur les Figures 1 à 4 et 9, pour réaliser une découpe par faisceau laser 10, il est habituel d'utiliser une installation de coupage laser comprenant une source laser 1, aussi appelé générateur laser ou dispositif laser, couplée à une fibre 2 de convoyage pour générer un faisceau laser 10 incident se propageant jusqu'à une tête de focalisation 3 comportant une buse laser 4 située en regard d'une pièce à découper 30.

La source laser 1 est avantageusement une source à fibres contenant de l'ytterbium, c'est-à-dire comprenant plusieurs fibres optiques comprenant ou dopées avec de l'ytterbium (Yb) qui servent à générer le rayonnement laser. De telles sources laser à fibres Yb sont couramment accessibles dans le commerce.

De manière alternative, la source laser 1 peut être aussi une source à fibres contenant de l'erbium.

La tête de focalisation 3 est alimentée en gaz d'assistance via une entrée de gaz 5 aménagée dans la paroi de ladite tête de focalisation 3 et par laquelle entrée 5, un gaz ou mélange gazeux sous pression provenant d'une source de gaz, par exemple une ou plusieurs bouteilles de gaz, une capacité de stockage ou encore une ou plusieurs canalisations de gaz, tel un réseau de distribution de gaz, est introduit en amont de la buse 4 et est évacué par cette buse 4 en direction de la pièce 30 à découper par faisceau laser.

Le gaz d'assistance sert à chasser le métal fondu hors de la saignée 12 de coupe obtenue par fusion du métal au moyen du faisceau laser 10 qui est focalisé à la position 11 par rapport à la surface de la pièce 30 à couper.

Le choix du gaz se fait en fonction des caractéristiques du matériau à couper, notamment de sa composition, de sa nuance, de son épaisseur.

Par exemple, de l'air, de l'oxygène, des mélanges azote/oxygène ou hélium/azote peuvent être utilisés pour le coupage de l'acier, alors que de l'azote, des mélanges azote/hydrogène ou argon/azote peuvent être utilisés pour couper l'aluminium ou l'acier inoxydable.

En fait, la pièce 30 à découper par laser peut être formée de différents matériaux métalliques, tel que l'acier, l'acier inoxydable, l'acier doux ou les alliages légers, tel l'aluminium et ses alliages, voire le titane et ses alliages, et avoir une épaisseur typiquement comprise entre 0.1 mm et 30 mm.

Au cours du procédé de découpe, le faisceau 10 peut être focalisé (en 11) dans ou près de la pièce 30, c'est-à-dire à l'extérieur, c'est-à-dire quelques mm au-dessus ou au-dessous de la surface supérieure 30a ou inférieure 30b de la pièce 30 ; à l'intérieur, c'est-à-dire dans l'épaisseur de la pièce ; ou encore sur la face supérieure 30a ou inférieure 30b de la pièce 30 à découper. De préférence, la position 11 du point focal se situe entre 5 mm au-dessus de la surface supérieure 30a et 5 mm au-dessous de la surface inférieure 30b de la pièce 30.

Le faisceau laser 10 utilisé dans le procédé de découpe de l'invention est préférablement généré par un laser à solide, préférablement un laser à fibres dont la longueur d'onde est préférablement comprise entre 1.06 et 1.10 µm. La puissance du faisceau laser 10 se situe typiquement entre 0.1 et 25 kW, préférablement entre 1 et 8 kW.

Le générateur laser 1 peut fonctionner en mode continu, quasi-continu ou impulsionncl. L'effet laser, c'est-à-dire le phénomène d'amplification de la lumière servant à générer le rayonnement laser, est obtenu au moyen d'un milieu amplificateur préférablement pompé par diodes laser et constitué d'une ou de typiquement plusieurs fibres optiques dopées, préférablement en silice dopées à l'ytterbium. Le faisceau laser est ensuite émis et convoyé par une ou plusieurs fibres optiques de convoyage, de préférence en silice fondue dont le diamètre est typiquement compris entre 50 et 200 µm; la fibre de convoyage ne contient pas d'ytterbium.

Suivant les caractéristiques de la source laser 1 et le diamètre de la fibre optique 2 de convoyage de faisceau, les valeurs de BPP du faisceau 10 incident et du faisceau focalisé initial sont comprises entre 0.33 et 25 mm.mrad, préférablement inférieures ou égales à 10 mm.mrad dans le cas de fibres de convoyage de diamètre inférieur ou égal à 200 µm.

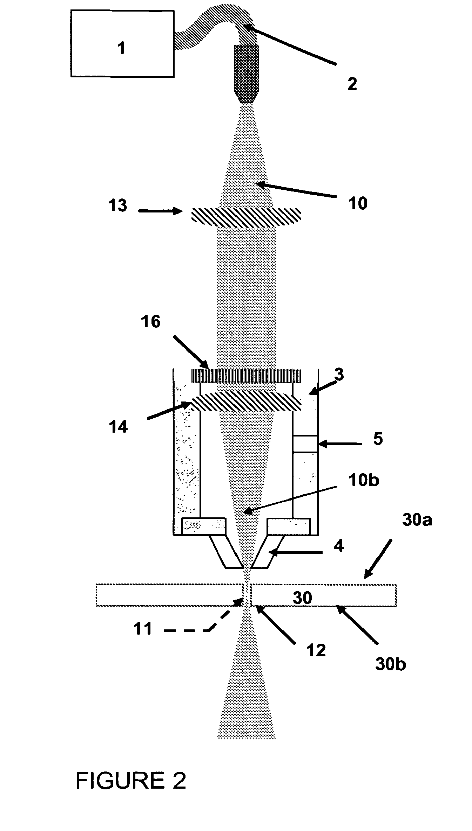

Comme on le voit, on utilise ensuite des dispositifs optiques 13, 14, 15 pour diriger et focaliser le faisceau laser 10 vers la pièce 30 à découper et, conformément à l'invention, un ou des dispositifs optiques 16 pour modifier ou ajuster le BPP du faisceau laser incident, de manière à obtenir un faisceau focalisé modifié 10b (Figures 2 à 4 et 9) présentant un BPP modifié différent du BPP initial du faisceau focalisé initial, c'est-à-dire le faisceau 10a dont le BPP n'a pas été modifié, comme selon l'art antérieur (Figure 1).

Plus précisément, une ou des optiques de collimation 13, de redirection 15 et de focalisation 14 permettent de propager le faisceau laser 10 délivré-par la fibre de convoyage 2 vers la pièce 30. Ces composants ou éléments optiques peuvent travailler en transmission ou en réflexion. Ainsi, les systèmes optiques de collimation et/ou de focalisation peuvent être composés de lentilles ou bien de miroirs de type sphériques ou asphériques, par exemple des miroirs paraboliques ou elliptiques.

Ces composants 13 à 15 optiques peuvent être choisis parmi les différents types de miroirs et de lentilles disponibles dans le commerce. Ils peuvent être réalisés dans des matériaux du type silice fondue, quartz, verres spéciaux, ZnS, ZnSe, ou métalliques, par exemple du cuivre, ou tout autre matériau susceptible d'être utilisé dans une tête de focalisation 3 de faisceau laser 10.

Selon l'invention, pour améliorer l'efficacité du procédé de découpe par faisceau laser 10 délivré par la source laser à fibres 1 et la fibre de convoyage 2, on agence sur le trajet du faisceau 10, un ou plusieurs dispositifs ou composants optiques 16, de préférence dans la tête 3 de découpe laser, permettant d'obtenir un faisceau laser focalisé modifié ayant un BPP différent du BPP initial donné du faisceau laser 10, sans complexifier l'installation.

Plus précisément, le dispositif optique 16 objet de l'invention est conçu pour modifier le BPP du faisceau laser focalisé, de manière à ce que son BPP modifié soit différent du BPP initial donné du faisceau émis par la fibre d'un facteur multiplicateur compris entre 1,2 et 5, conduisant ainsi à une augmentation du BPP, de préférence d'au moins 1.5.

Comme illustré sur les Figures 5a et 5b, le dispositif optique 16 produit un changement de la valeur du BPP du faisceau focalisé initial en modifiant les principaux paramètres du faisceau laser focalisé 10a: le rayon au col ωₐ et la divergence θₐ. Le dispositif optique 16 permet ainsi d'obtenir un faisceau focalisé 10b dont le BPP est différent de celui du faisceau focalisé 10a obtenu en l'absence dudit dispositif optique 16.

Le faisceau focalisé 10b a une distribution d'intensité similaire à celle du faisceau 10a non modifié, préférablement du type gaussien ou pseudo-gaussien, ou une distribution d'intensité différente, par exemple du type anneau, i.e. « hollow-ring » ou « doughnut ».

Les Figures 2 à 4 illustrent différents modes de réalisation de l'invention, à savoir un mode transmissif et un mode réflectif.

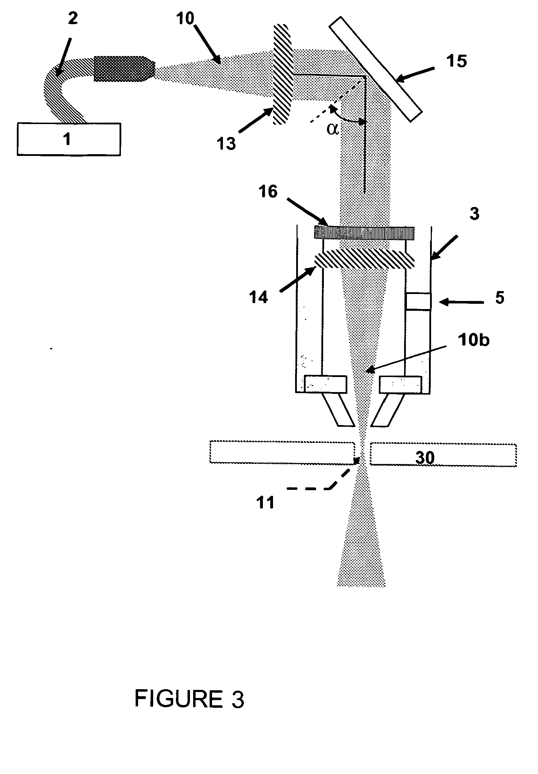

Dans un premier mode de réalisation, le dispositif optique 16 de l'invention opère en transmission (Figures 2 et 3). En mode transmissif, les matériaux utilisés pour la fabrication du dispositif optique 16 peuvent être de la silice fondue, du quartz, du verre spécial, des matériaux du type ZnS, ZnSe, ou tout autre matériau transparent à la longueur d'onde de travail. Les deux surfaces du composant sont préférablement traitées par dépôt d'un revêtement « antireflet » ou analogue. Toutefois, le composant optique 16 peut aussi fonctionner sans traitement « antireflet ».

Dans ce cas, les optiques de collimation, direction et focalisation du faisceau intégrées à la tête de découpe 3 fonctionnent en transmission (Figures 1 et 2) ou comprennent au moins un composant réflectif, fonctionnant à un angle d'incidence α compris entre 5 et 50°, par exemple un miroir plan (Figure 3) ou un miroir de forme sphérique ou asphérique.

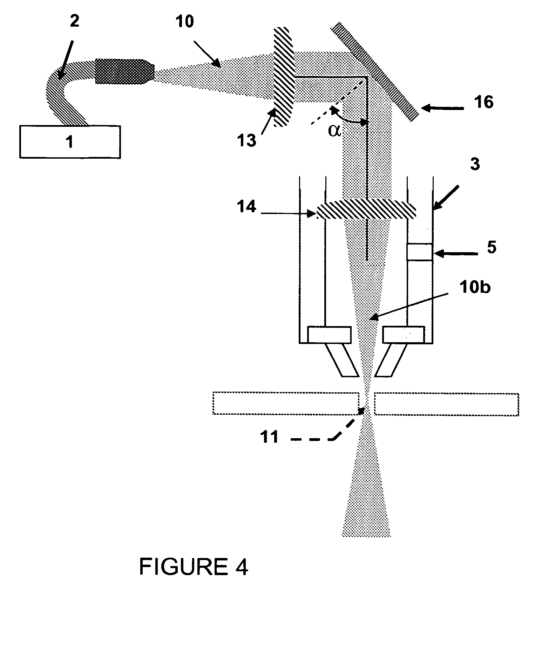

De façon alternative, le dispositif de modification du BPP inclut au moins un élément optique configuré pour fonctionner en réflexion, à un angle d'incidence α compris entre 5 et 50° (Figure 4). En réflexion, au moins une face du composant optique 16 est revêtue d'un traitement réfléchissant. Les matériaux utilisés pour la fabrication du dispositif optique 16 peuvent être de la silice fondue, du quartz, du verre spécial, des matériaux du type ZnS, ZnSe ou métalliques, par exemple du cuivre.

De plus, le dispositif de modification du BPP du faisceau focalisé 10a peut mettre en oeuvre d'autres fonctions optiques du type focalisation, correction ou homogénéisation de faisceau. De préférence, le dispositif optique de l'invention combine une fonction de focalisation et une fonction de modification du BPP du faisceau laser focalisé.

L'épaisseur du composant 16 est typiquement comprise entre 0.5 et 10 mm, de préférence entre 3 et 7 mm. Ces valeurs d'épaisseurs sont préférables dans le cas où le dispositif est amené à supporter de fortes pressions ou températures, c'est-à-dire des pressions pouvant atteindre 25 bar et des températures de plus de 100 °C. Le composant 16 est typiquement de forme circulaire et son diamètre est compris entre 25 et 75 mm environ, et préférablement égal à celui des éléments optiques de collimation et de focalisation de la tête de découpe 3.

La description suivante va permettre de mieux comprendre la nature du dispositif optique sur lequel repose l'invention.

Le dispositif optique 16 utilisé pour la modification du BPP du faisceau laser est formé d'un ou plusieurs éléments optique diffractant transmissif ou réflectif, préférablement un élément optique diffractant transmissif ou réflectif. Le composant permet d'introduire une modulation spatiale de la phase sur le front d'onde du faisceau incident 10. En utilisant un motif de modulation de phase adéquate, le front d'onde du faisceau incident 10 peut être altéré, ajusté ou modifié de manière à obtenir un faisceau focalisé 10b possédant le BPP de valeur souhaitée, différente de la valeur de BPP du faisceau incident 10.

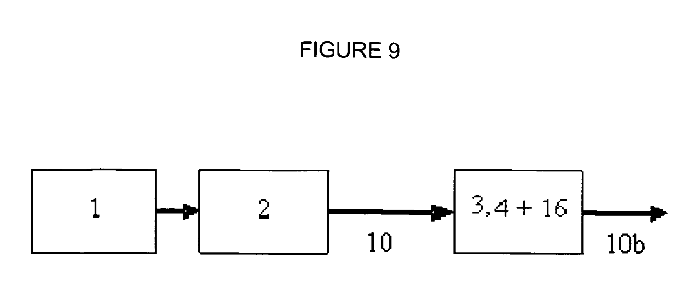

Le dispositif optique 16 est incorporé dans la tête (3, 4) de découpe laser et placé sur le trajet optique du faisceau laser 10, comme illustré en Figure 9. De préférence, le dispositif optique 16 apte à et conçu pour modifier le BPP du faisceau laser est positionné avant la ou les optiques de focalisation 14, et sur le trajet du faisceau laser 10 collimaté.

Selon l'invention, on utilise un élément optique 16 diffractant pour modifier le BPP du faisceau focalisé 10a, comme illustré en Figure 1. La surface de l'optique 16 diffractive présente des microstructures qui sont gravées dans le substrat du composant 16 sur des profondeurs variables, de l'ordre de la longueur d'onde de travail. Ces microreliefs forment une carte de phase 2D induisant la diffraction et le déphasage localement variable de l'onde incidente. Typiquement, l'élément optique 16 diffractant présente des profondeurs de gravures à deux ou à multiples niveaux. La carte de modulation de phase de l'élément optique 16 est ainsi constituée de deux valeurs de déphasage ou plus. La distribution de phase de l'élément 16 mis en oeuvre est conçue pour modifier le BPP du faisceau laser, de manière à obtenir un faisceau focalisé 10b dont le BPP est différent de celui du faisceau focalisé 10a obtenu en l'absence de l'élément optique 16 diffractant.

Des exemples de cartes de modulation spatiale de phase pouvant être implémentées sur des composants optiques 16 de mise en forme de faisceau, ainsi que des exemples de techniques utilisées pour la fabrication de tels composants, sont donnés par les documents suivants, auxquels on peut se reporter pour plus de détails à ce sujet :
- *«Diffractive Optics : Design, Fabrication and Test »,* D. C. O'Shea et al., SPIE Press, Bellingham, Washington (2003) ;
- « Création of Diffractive Optical Elements by One Step E-beam Lithography for Optoelectronics and X-ray Lithography », A. A. Aristov et al., Baltic Electronics Conférence, October 7-11, 1996, p. 483-486, Tallinn, Estonia ; et
- « Development of Diffractive Beam Homogenizer», T. Hirai et al., SEI Technical Review, n° 60, June 2005, p. 17-23.

De plus, les optiques diffractives 16 peuvent réaliser les mêmes fonctions optiques que les composants réfractifs traditionnels. Par conséquent, un dispositif optique 16 combinant une fonction diffractive 16 et une fonction autre, telle que focalisation 14 du faisceau laser 10, peut aussi être incorporé dans une tête de découpe 3.

Afin de tester l'efficacité de l'utilisation d'un élément optique 16 selon l'invention, des essais ont été menés en utilisant une installation selon la Figure 3 pour ajuster/modifier le BPP d'un faisceau laser 10 d'une puissance de 2 kW généré par un générateur laser 1 à fibres Yb et une fibre de convoyage 2.

Les Figures 5a et 5b schématisent les configurations testées, respectivement sans et avec élément optique 16, ainsi que l'effet que peut avoir l'incorporation d'un tel élément sur les principaux paramètres du faisceau focalisé.

Le BPP du faisceau laser a été modifié à l'aide d'un élément optique diffractant 16, comme illustré en Figure 5b. L'élément 16 a été monté dans une tête de découpe 3, sur le trajet optique du faisceau 10 collimaté précédant le système de focalisation 14.

A titre comparatif, la même installation a été utilisée mais sans incorporation de l'élément optique diffractant 16 en aval de l'élément de collimation 13, comme illustré en Figure 5a.

L'élément optique 16 utilisé est un élément diffractant en silice fondue. Avec cet élément optique 16, l'effet obtenu est un élargissement du rayon au col du faisceau laser focalisé ainsi qu'une augmentation de sa divergence, comme illustré par la ligne en pointillés (---) de la Figure 5b schématisant le faisceau focalisé modifié 10b par rapport au faisceau focalisé 10a obtenu dont le BPP n'est pas modifié. Le faisceau 10b possède un rayon au col ω_{b} et une divergence θ_{b} différents de ceux du faisceau focalisé 10a en l'absence d'élément optique 16.

Des mesures de caustiques de faisceau focalisé réalisées grâce à un analyseur de faisceau, permettent de confirmer l'augmentation du BPP du faisceau focalisé après introduction de l'élément optique 16 sur le trajet du faisceau laser 10 collimaté par comparaison à une absence d'un tel élément optique 16.

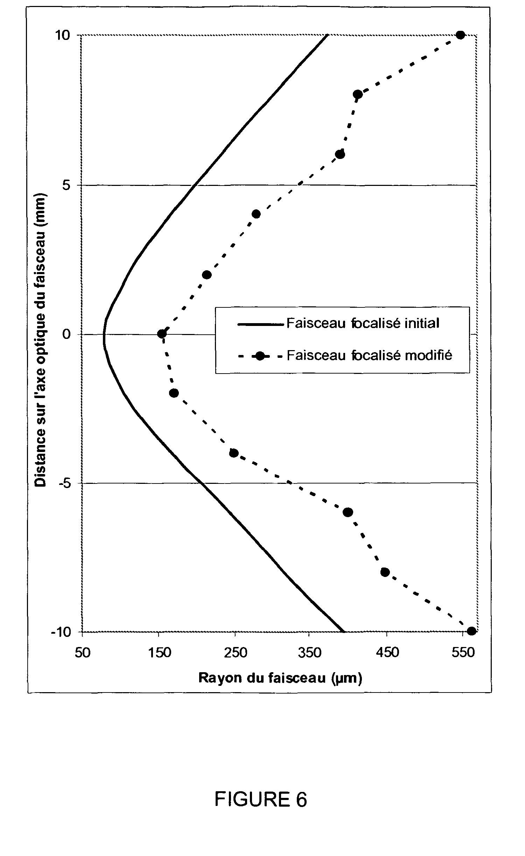

La Figure 6 présente les résultats de mesures expérimentales de l'évolution du rayon du faisceau focalisé le long de l'axe optique de propagation, avant et après insertion de l'élément optique diffractant 16.

Ces tracés de caustiques ont été réalisés en mesurant le rayon du faisceau pour lequel 86% de la puissance du laser est contenue dans un disque de ce rayon, ceci dans des plans de propagation successifs se situant dans des plages de 10 mm de part et d'autre du col du faisceau focalisé.

Une augmentation du BPP, résultant de l'augmentation du rayon au col du faisceau focalisé et de sa divergence, a été constatée après introduction de l'élément optique 16. Avec l'installation testée, la valeur de BPP du faisceau focalisé initial 10a est égale à 3 mm.mrad sans l'élément optique 16 (trait continu sur la Figure 6), alors qu'avec l'élément optique 16, le BPP du faisceau focalisé modifié 10b est égal à 8.6 mm.mrad (trait en pointillés sur la Figure 6).

Il est ainsi démontré qu'en incorporant une optique diffractive dans un dispositif de focalisation de faisceau laser tel qu'une tête de découpe, il est possible d'amener le BPP du faisceau focalisé à des valeurs ne pouvant pas être obtenues simplement à l'aide de dispositifs optiques traditionnels, tels que des lentilles ou des miroirs, car ces éléments ne sont pas aptes à modifier significativement le BPP d'un faisceau laser.

Dans tous les cas, en intégrant un dispositif optique 16 apte à modifier le BPP du faisceau laser incident, dans une tête (3, 4) de découpe laser, le BPP du faisceau focalisé 10a peut être ajusté en fonction de la gamme d'épaisseurs découpées de manière à optimiser les performances du procédé en termes de vitesse et de qualité de découpe.

Au final, le BPP initial du faisceau laser focalisé est multiplié par un facteur compris entre 1.2 et 5, le profil d'intensité initial du faisceau pouvant également être modifié, à savoir quasi-gaussien, anneau ou autre profil.

Afin de démontrer l'intérêt du procédé de l'invention, des essais de découpe ont été menés sur acier doux et sur acier inoxydable à l'aide d'un laser à fibres émettant un rayonnement de longueur d'onde 1.07 µm avec une puissance de 2 kW, en utilisant des faisceaux ayant des BPP différents. Plus précisément, les performances obtenues en termes de vitesse et de qualité de découpe avec des faisceaux focalisés présentant deux valeurs de BPP distinctes, à savoir 2.4 mm.mrad et 4.3 mm.mrad, ont été comparées.

La tête de découpe utilisée était constituée d'un collimateur d'une longueur focale de 55 mm, combiné à des lentilles de focalisation de longueurs focales égales à 127 mm et 190.5 mm selon le matériau découpé.

Pour chaque matériau, on compare les performances obtenues avec les deux valeurs de BPP distinctes et des combinaisons optiques identiques.

Dans le cas de l'acier doux, les essais ont été réalisés sur des épaisseurs allant de 2 à 10 mm, pour des pressions d'oxygène allant de 0.5 à 1.6 bar, alors que, dans le cas de l'acier inoxydable, les essais ont été réalisés sur des épaisseurs allant de 1.5 à 8 mm, pour des pressions d'azote allant de 15 à 19 bar.

Dans tous les cas, le gaz d'assistance a été délivré par des buses de diamètres compris entre 1 et 3 mm.

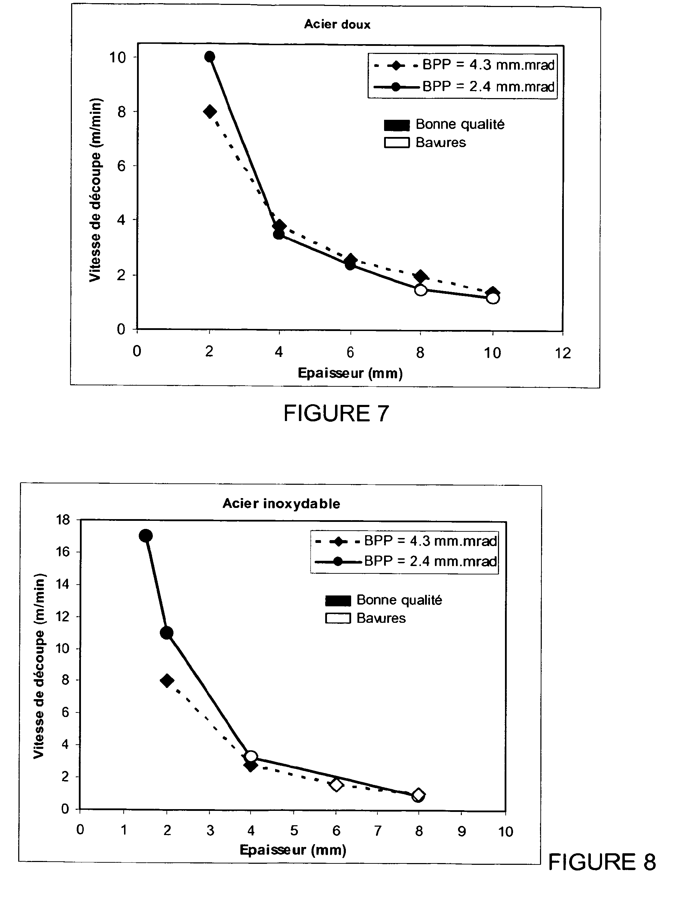

La Figure 7 présente les vitesses de découpe atteintes en fonction de l'épaisseur d'acier doux à traiter et du BPP du faisceau focalisé mis en oeuvre durant la découpe.

La courbe en trait plein (-) relie les points obtenus pour un faisceau focalisé dont le BPP est égal à 2.4 mm.mrad, alors que la courbe en pointillés (- - -) relie les points obtenus pour un faisceau focalisé dont le BPP est égal à 4.3 mm.mrad.

Les symboles pleins correspondent à une bonne qualité de découpe (absence de bavures, rugosité acceptable), alors que les symboles vides signifient que des bavures sont présentes et que la qualité n'est pas acceptable industriellement.

Les résultats obtenus sur acier doux montrent que le faisceau focalisé de BPP le plus faible permet de découper plus vite les fines épaisseurs (2 mm), tandis que le faisceau focalisé de BPP plus élevé permet d'améliorer la qualité de découpe pour les épaisseurs de 8 et 10 mm.

On comprend donc immédiatement l'intérêt industriel qui existe de pouvoir modifier simplement le BPP d'un faisceau laser focalisé, conformément à l'invention en utilisant par exemple un composant de phase adapté permettant ici de passer d'un BPP de 2.4 mm.mrad à un BPP de 4.3 mm.mrad, de manière à prendre en compte les caractéristiques et spécificités d'un matériau à couper, en particulier sa composition, son épaisseur.

Suivant le même principe, la Figure 8 présente les résultats obtenus sur acier inoxydable. Comme on peut le voir, les tôles de 2 mm sont découpées à plus grande vitesse avec le faisceau focalisé de BPP égal à 2.4 mm.mrad et la qualité de découpe est améliorée sur les tôles de 4 mm avec le faisceau focalisé de BPP égal à 4.3 mm.mrad. Les valeurs de BPP sont obtenues comme dans les essais précédents.

Ces résultats confirment l'intérêt du procédé et du dispositif de l'invention puisqu'ils démontrent qu'un choix judicieux du BPP du faisceau laser focalisé en fonction, notamment de l'épaisseur du matériau traité, permet d'optimiser les performances du procédé de découpe laser, en termes de vitesse et de qualité de coupe.

Le choix de la valeur de BPP la plus adaptée à la découpe d'une tôle de caractéristiques données, notamment en termes de composition ou nuance métallurgiques et/ou d'épaisseur, et/ou du composant de phase ou similaire à utiliser pour obtenir ledit BPP souhaité peut se faire empiriquement par des essais de découpe sur des échantillons de la tôle à découper avec un faisceau laser focalisé présentant des BPP différents ou avec différents composants de phase conduisant à des facteurs multiplicateurs différents, et comparaison des résultats ainsi obtenus.

Le procédé de l'invention repose donc sur l'utilisation d'un laser à fibres d'ytterbium et une mise en oeuvre d'au moins un élément optique diffractant transmissif ou réflectif permettant un changement du facteur de qualité ou BPP (Beam Parameter Product) du faisceau laser focalisé, c'est-à-dire le faisceau de découpe, pour tenir compte notamment des caractéristiques du matériau à couper, modifiant ainsi les caractéristiques de propagation et la distribution d'énergie du faisceau laser focalisé le long de la saignée de découpe.

## Revendications

1. Procédé de découpe par faisceau laser (10) d'une pièce (30) à couper, dans lequel :
a) on génère un faisceau laser (10) incident présentant une longueur d'onde dite de travail et un facteur de qualité (BPP) initial donné au moyen d'une source laser (1) à fibres contenant de l'ytterbium couplée à au moins une fibre optique de convoyage de faisceau,
b) on amène ledit faisceau laser (10) incident jusqu'à une tête de focalisation (3, 4) comportant au moins une optique de focalisation (14),
c) on focalise le faisceau laser (10) incident au moyen de l'optique de focalisation (14) de manière à obtenir un faisceau laser focalisé, et
d) on découpe la pièce (30) au moyen du faisceau laser focalisé,
**caractérisé en ce qu'**on ajuste ou on modifie le facteur de qualité (BPP) du faisceau laser incident (10) au moyen d'un dispositif optique (16) apte à et conçu pour modifier ou agir sur le BPP d'un faisceau laser, de manière à obtenir un faisceau laser focalisé (10b) présentant un BPP modifié qui soit différent du BPP dudit faisceau laser incident, ledit dispositif optique (16) étant au moins un élément optique diffractant transmissif ou réflectif et étant apte à produire un faisceau laser focalisé modifié dont le BPP est différent du BPP initial du faisceau laser (10) incident d'un facteur multiplicateur supérieur ou égal à 1,2 et inférieur ou égal à 5, la surface du dispositif optique (6) présentant des microstructures gravées dans le substrat dudit dispositif optique (16) sur des profondeurs variables de l'ordre de la longueur d'onde de travail.

2. Procédé selon la revendication 1, **caractérisé en ce qu'**on agence le dispositif optique (16) apte à modifier le BPP du faisceau laser sur le trajet du faisceau laser incident (10).

3. Procédé selon l'une des revendications précédentes, **caractérisé en ce que** le BPP du faisceau incident est compris entre 0.33 et 25 mm.mrad, de préférence inférieur ou égal à 10 mm.mrad dans le cas d'une fibre optique de convoyage de diamètre inférieur ou égal à 200 µm.

4. Procédé selon l'une des revendications précédentes, **caractérisé en ce que** le dispositif optique (16) est apte à produire un faisceau laser focalisé modifié dont le BPP est différent du BPP initial du faisceau laser (10) incident d'un facteur multiplicateur supérieur ou égal à 1,5 et/ou inférieur ou égal à 3.

5. Procédé selon l'une des revendications précédentes, **caractérisé en ce que** le dispositif optique (16) produit un changement de la valeur du BPP du faisceau focalisé initial en modifiant le rayon au col (ωₐ) et la divergence (θₐ) du faisceau laser focalisé (10a).

6. Procédé selon l'une des revendications précédentes, **caractérisé en ce que** la tête de focalisation (3, 4) comprend au moins une optique de focalisation (14) et le dispositif optique (16) apte à et conçu pour modifier ou agir sur le BPP initial du faisceau laser incident.

7. Procédé selon l'une des revendications précédentes, **caractérisé en ce que** le dispositif optique (16) est réalisé en silice fondue, en quartz, en verre spécial, en ZnS, en ZnSe ou en matériau métallique.

8. Procédé selon l'une des revendications précédentes, **caractérisé en ce que** le dispositif optique (16) a une épaisseur comprise entre 0.5 et 10 mm et est de forme circulaire avec un diamètre compris entre 25 et 75 mm.

9. Procédé selon l'une des revendications précédentes, **caractérisé en ce que** le dispositif optique (16) est de type réflectif fonctionnant avec un angle d'incidence (α) compris entre 5 et 50°.

10. Procédé selon l'une des revendications précédentes, **caractérisé en ce que** la longueur d'onde du faisceau laser est comprise entre 1.06 et 1.10 µm.

11. Procédé selon l'une des revendications précédentes, **caractérisé en ce que** la puissance du faisceau laser (10) est comprise entre 0.1 et 25 kW.

12. Installation de coupage laser comprenant une source laser (1) à fibres contenant de l'ytterbium et une fibre de convoyage de faisceau (2) pour générer un faisceau laser (10) ayant un BPP initial donné se propageant jusqu'à une tête de focalisation (3, 4) comprenant une optique de focalisation (14), **caractérisée en ce qu'**au moins un dispositif optique (16) apte à et conçu pour modifier ou ajuster le BPP initial du faisceau laser incident est agencé sur le trajet du faisceau (10), ledit dispositif optique (16) étant au moins un élément optique diffractant transmissif ou réflectif et où la surface dudit dispositif optique (16) présente des microstructure gravées dans le substrat dudit dispositif optique (16) sur des profondeurs variables de l'onde de la longueur d'onde de travail, afin de produire un faisceau laser focalisé modifié dont le BPP est différent du BPP initial du faisceau laser (10) incident d'un facteur multiplicateur supérieur ou égal à 1,2 et inférieur ou égal à 5.

13. Installation selon la revendication 12, **caractérisée en ce que** le dispositif optique (16) est agencé entre la fibre de convoyage de faisceau (2) et l'optique de focalisation (14).

## Patentansprüche

1. Verfahren zum Laserstrahlschneiden (10) eines zu bearbeitenden Werkstücks (30), wobei:
a) ein einfallender Laserstrahl (10), der eine Wellenlänge, genannt Arbeitswellenlänge, und einen gegebenen Anfangsqualitätsfaktor (BPP) aufweist, mithilfe einer Laserquelle (1) mit Fasern, die Ytterbium enthalten, die in mindestens einen Trägerglasfaserstrahl eingekoppelt ist, erzeugt wird,
b) der einfallende Laserstrahl (10) bis zu einem Fokussierkopf (3, 4) gelenkt wird, der mindestens eine Fokussieroptik (14) umfasst,
c) der einfallende Laserstrahl (10) mithilfe der Fokussieroptik (14) fokussiert wird, um einen fokussierten Laserstrahl zu erhalten, und
d) das Werkstück (30) mithilfe des fokussierten Laserstrahls geschnitten wird, **dadurch gekennzeichnet, dass** der Qualitätsfaktor (BPP) des einfallenden Laserstrahls (10) mithilfe einer optischen Vorrichtung (16) anpasst oder modifiziert wird, die geeignet und konzipiert ist, um den BPP des Laserstrahls zu modifizieren oder auf diesen einzuwirken, um einen fokussierten Laserstrahl (10b) zu erhalten, der einen modifizierten BPP aufweist, der sich vom BPP des einfallenden Laserstrahls unterscheiden soll, wobei die optische Vorrichtung (16) mindestens ein transmissives oder reflektierendes diffraktives, optisches Element umfasst und geeignet ist, einen modifizierten, fokussierten Laserstrahl zu erzeugen, dessen BPP sich vom Ausgangs-BPP des einfallenden Laserstrahls (10) um einen Multiplikationsfaktor größer oder gleich 1,2 und kleiner oder gleich 5 unterscheidet, wobei die Oberfläche der optischen Vorrichtung (6) Mikrostrukturen aufweist, die in das Substrat der optischen Vorrichtung (16) in verschiedenen Tiefen in der Größenordnung der Arbeitswellenlänge eingraviert sind.

2. Verfahren nach Anspruch 1, **dadurch gekennzeichnet, dass** die optische Vorrichtung (16), die geeignet ist, den BPP des Laserstrahls zu modifizieren, in dem Gang des einfallenden Laserstrahls (10) angeordnet wird.

3. Verfahren nach einem der vorhergehenden Ansprüche, **dadurch gekennzeichnet, dass** der BPP des einfallenden Laserstrahls im Bereich zwischen 0,33 und 25 mm.mrad, bevorzugt kleiner oder gleich 10 mm.mrad ist, wenn die Trägerglasfaser einen Durchmesser kleiner oder gleich 200 µm aufweist.

4. Verfahren nach einem der vorhergehenden Ansprüche, **dadurch gekennzeichnet, dass** die optische Vorrichtung (16) geeignet ist, einen modifizierten, fokussierten Laserstrahl zu erzeugen, dessen BPP sich vom Ausgangs-BPP des einfallenden Laserstrahls (10) um einen Multiplikationsfaktor größer oder gleich 1,5 und/oder kleiner oder gleich 3 unterscheidet.

5. Verfahren nach einem der vorhergehenden Ansprüche, **dadurch gekennzeichnet, dass** die optische Vorrichtung (16) eine Änderung des Werts des Ausgangs-BPP des fokussierten Strahls erzeugt, indem der Radius der Strahltaille (ωₐ) und die Divergenz (θₐ) des fokussierten Laserstrahls (10a) modifiziert werden.

6. Verfahren nach einem der vorhergehenden Ansprüche, **dadurch gekennzeichnet, dass** der Fokussierkopf (3, 4) mindestens eine Fokussieroptik (14) und die optische Vorrichtung (16) umfasst, die geeignet und konzipiert ist, um den Ausgangs-BPP des einfallenden Laserstrahls zu modifizieren oder auf diesen einzuwirken.

7. Verfahren nach einem der vorhergehenden Ansprüche, **dadurch gekennzeichnet, dass** die optische Vorrichtung (16) aus Quarzglas, aus Quarz, aus Spezialglas, aus ZnS, aus ZnSe oder aus metallischem Material ausgeführt wird.

8. Verfahren nach einem der vorhergehenden Ansprüche, **dadurch gekennzeichnet, dass** die optische Vorrichtung (16) eine Dicke im Bereich zwischen 0,5 und 10 mm aufweist und kreisförmig ist, mit einem Durchmesser im Bereich zwischen 25 und 75 mm.

9. Verfahren nach einem der vorhergehenden Ansprüche, **dadurch gekennzeichnet, dass** die optische Vorrichtung (16) eine reflektierende Vorrichtung ist, die mit einem Einfallswinkel (α) im Bereich zwischen 5 und 50° arbeitet.

10. Vorrichtung nach einem der vorhergehenden Ansprüche, **dadurch gekennzeichnet, dass** die Wellenlänge des Laserstrahls im Bereich zwischen 1,06 und 1,10 µm liegt.

11. Verfahren nach einem der vorhergehenden Ansprüche, **dadurch gekennzeichnet, dass** die Leistung des Laserstrahls (10)im Bereich zwischen 0,1 und 25 kW liegt.

12. Einrichtung zum Laserschneiden, die eine Laserquelle (1) mit Fasern, die Ytterbium enthalten und einen Trägerfaserstrahl (2) umfasst, um einen Laserstrahl (10) zu erzeugen, der einen gegebenen Ausgangs-BPP aufweist, der sich bis zu einem Fokussierkopf (3, 4) ausbreitet, der eine Fokussieroptik (14) umfasst, **dadurch gekennzeichnet, dass** mindestens ein optische Vorrichtung (16), die geeignet und konzipiert ist, um den Ausgangs-BPP des einfallenden Laserstrahls zu modifizieren oder anzupassen, im Strahlgang (10) angeordnet ist, wobei die optische Vorrichtung (16) mindestens ein transmissives oder reflektierendes, diffraktives optisches Element ist und wobei die Oberfläche der optischen Vorrichtung (16) Mikrostrukturen aufweist, die in das Substrat der optischen Vorrichtung (16) in verschiedenen Tiefen in der Größenordnung der Arbeitswellenlänge eingraviert sind, um einen modifizierten, fokussierten Laserstrahl zu erzeugen, dessen BPP sich vom Ausgangs-BPP des einfallenden Laserstrahls (10) um einen Multiplikationsfaktor größer oder gleich 1,2 und kleiner oder gleich 5 unterscheidet.

13. Einrichtung nach Anspruch 12, **dadurch gekennzeichnet, dass** die optische Vorrichtung (16) zwischen dem Trägerfaserstrahl (2) und der Fokussieroptik (14) angeordnet ist.

## Claims

1. Method for cutting a workpiece (30) to be cut using a laser beam (10), comprising the following steps:
a) generating an incident laser beam (10), having a wavelength referred to as a working wavelength and a given initial beam parameter product (BPP), by means of a laser source (1) which has fibres containing ytterbium and is coupled to at least one beam-conveying optical fibre;
b) bringing said incident laser beam (10) to a focusing head (3, 4) having at least one focusing optical system (14);
c) focussing the incident laser beam (10) by means of the focusing optical system (14) so as to obtain a focused laser beam; and
d) cutting the workpiece (30) by means of the focused laser beam, **characterised in that** the beam parameter product (BPP) of the incident laser beam (10) is adjusted or modified by means of an optical device (16) which is able and designed to modify or act on the BPP of a laser beam so as to obtain a focused laser beam (10b) having a modified BPP which is different from the BPP of said incident laser beam, said optical device (16) being at least one transmissive or reflective diffracting optical component and being capable of producing a modified focused laser beam, the BPP of which is different from the initial BPP of the incident laser beam (10) by a multiplication factor which is greater than or equal to 1.2 and less than or equal to 5, the surface of the optical device (6) having microstructures engraved in the substrate of said optical device (16) over variable depths of approximately the working wavelength.

2. Method according to claim 1, **characterised in that** the optical device (16) which is capable of modifying the BPP of the laser beam is arranged in the path of the incident laser beam (10).

3. Method according to either of the preceding claims, **characterised in that** the BPP of the incident beam is between 0.33 and 25 mm.mrad, preferably less than or equal to 10 mm.mrad in the case of a conveying optical fibre having a diameter which is less than or equal to 200 µm.

4. Method according to any of the preceding claims, **characterised in that** the optical device (16) is capable of producing a modified focused laser beam, the BPP of which is different from the initial BPP of the incident laser beam (10) by a multiplication factor which is greater than or equal to 1.5 and/or less than or equal to 3.

5. Method according to any of the preceding claims, **characterised in that** the optical device (16) produces a change in the value of the BPP of the initial focused beam by modifying the waist radius (ωₐ) and the divergence (θₐ) of the focused laser beam (10a).

6. Method according to any of the preceding claims, **characterised in that** the focusing head (3, 4) comprises at least one focusing optical system (14) and the optical device (16) is able and designed to modify or act on the initial BPP of the incident laser beam.

7. Method according to any of the preceding claims, **characterised in that** the optical device (16) is made of fused silica, quartz, special glass, ZnS, ZnSe or a metal material.

8. Method according to any of the preceding claims, **characterised in that** the optical device (16) has a thickness of between 0.5 and 10 mm, is circular and has a diameter of between 25 and 75 mm.

9. Method according to any of the preceding claims, **characterised in that** the optical device (16) is reflective, operating with an angle of incidence (α) of between 5 and 50°.

10. Method according to any of the preceding claims, **characterised in that** the wavelength of the laser beam is between 1.06 and 1.10 µm.

11. Method according to any of the preceding claims, **characterised in that** the power of the laser beam (10) is between 0.1 and 25 kW.

12. Laser-cutting unit comprising a laser source (1) having fibres containing ytterbium, and a beam-conveying fibre (2) for generating a laser beam (10) having a given initial BPP propagating as far as a focusing head (3, 4), which comprises a focusing optical system (14), **characterised in that** at least one optical device (16) which is able and designed to modify or adjust the initial BPP of the incident laser beam is arranged in the path of the beam (10), said optical device (16) being at least one transmissive or reflective diffracting optical component and the surface of said optical device (16) having microstructures engraved in the substrate of said optical device (16) over variable depths of approximately the working wavelength in order to produce a modified focused laser beam, the BPP of which is different from the initial BPP of the incident laser beam (10) by a multiplication factor which is greater than or equal to 1.2 and less than or equal to 5.

13. Unit according to claim 12, **characterised in that** the optical device (16) is arranged between the beam-conveying fibre (2) and the focusing optical system (14).
